(19) Europäisches Patentamt
European Patent Office
Office européen des brevets

(11) **EP 2 697 745 B1**

(12) **FASCICULE DE BREVET EUROPEEN**

(45) Date de publication et mention de la délivrance du brevet:
**01.01.2025 Bulletin 2025/01**

(21) Numéro de dépôt: **12713994.7**

(22) Date de dépôt: **12.04.2012**

(51) Classification Internationale des Brevets (IPC):
**G06K 19/07** *(2006.01)*    **G06K 19/077** *(2006.01)*

(52) Classification Coopérative des Brevets (CPC):
**G06K 19/07773**

(86) Numéro de dépôt international:
**PCT/EP2012/056726**

(87) Numéro de publication internationale:
**WO 2012/140169 (18.10.2012 Gazette 2012/42)**

(54) **PROCEDE, CIRCUIT ET DISPOSITIF DE COMMUNICATION SANS CONTACT A EMISSION ACTIVEE**

VERFAHREN, SCHALTUNG UND VORRICHTUNG ZUR KONTAKTLOSEN KOMMUNIKATION MIT AKTIVIERTER ÜBERTRAGUNG

METHOD, CIRCUIT, AND DEVICE FOR CONTACTLESS COMMUNICATION WITH ACTIVATED TRANSMISSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.04.2011 EP 11305453**
**06.04.2012 EP 12305408**

(43) Date de publication de la demande:
**19.02.2014 Bulletin 2014/08**

(73) Titulaire: **Thales Dis France SAS**
**92190 Meudon (FR)**

(72) Inventeurs:
• **CARUANA, Jean-Paul**
**F-83500 La Seyne-sur-Mer (FR)**
• **BUTON, Christophe**
**F-13420 Gemenos (FR)**
• **CAPOMAGGIO, Grégory**
**F-13360 Roquevaire (FR)**

(74) Mandataire: **Quintero Romero, Manuel et al**
**Thales Dis France SAS**
**Intellectual Property Department**
**6, rue de la Verrerie**
**92190 Meudon (FR)**

(56) Documents cités:
**EP-A2- 1 898 342    US-A- 5 621 913**
**US-B1- 6 356 535**

**Description**

Domaine de l'invention.

L'invention concerne un procédé de communication sans contact activée ainsi qu'un circuit et dispositif de mise en oeuvre. Elle vise notamment à spécifier les caractéristiques des signaux, des antennes et principe de cette nouvelle façon d'utiliser la technologie sans contact. La communication radiofréquence est en principe de courte portée et effectuée par couplage et induction électromagnétique de portée de l'ordre de 0,01 voire 1 m.

Elle trouve notamment application dans des objets portables électroniques par exemple des cartes à mémoire telles que de type SD (de la société Sandisk).

De telles cartes sont actuellement utilisées dans une interface carte de téléphones portables pour effectuer une transaction de type sans contact répondant notamment à la norme ISO/IEC 14443 ou 15693, dans la mesure où ces téléphones sont dépourvus d'interfaces sans contact en sortie d'usine.

Art antérieur.

La technologie actuelle ISO/IEC 14443 et NFC acronyme de Near Field communication (communication radiofréquence de proximité) est basée sur un principe de rétro modulation d'un signal émis par un lecteur.

Selon ce principe, une certaine quantité de champ électromagnétique fournie par un lecteur, doit être modulée par l'objet à puce sans contact de proximité également appelé PICC (acronyme anglais de Proximity Integrated Circuit Card). Afin d'être conforme à la sensibilité du lecteur, une amplitude minimale de champ est requise pour être modulée par l'objet. Cette modulation de la porteuse de lecteur doit générer deux bandes latérales avec une amplitude au moins égale à $22/H^{0.5}$. Pour remplir cette condition, il est nécessaire d'avoir un minimum de couplage entre le lecteur et l'objet. Le facteur de couplage est directement dépendant des surfaces de l'antenne du lecteur et de celle de l'objet sans contact.

Dans le cas de très petit objet sans contact : par exemple, une carte micro SD, la surface de l'antenne radiofréquence est radicalement trop petite. En outre, ce genre d'objet est destiné à être incorporé dans un dispositif hôte tel un téléphone portable. Cette dernière opération réduit encore plus le couplage de l'objet sans contact avec le lecteur à cause de l'environnement métallique du téléphone.

Le brevet EP1801741 (B1) décrit un procédé de génération d'un champ électromagnétique propre par un support de données portable (transpondeur), dans lequel la transmission de données à un lecteur s'effectue dans un mode de communication activée et dans lequel la transmission de champ électromagnétique propre de l'objet est vue par le lecteur comme une modulation du champ du lecteur. Toutefois, cette solution ne semble pas être décrite complètement ou ne pas fonctionner correctement comme décrit.

En outre, l'enseignement de ce brevet est très compliqué. Sa mise en oeuvre nécessite plus de composants électroniques, notamment des filtres, un oscillateur, un composant NFC. En outre, les contrôleurs NFC actuels requièrent deux antennes, l'une étant dédiée à la récupération d'énergie et l'autre étant dédiée à l'émission/réception de données.

La demande de brevet EP 1 898 342 décrit un transpondeur radiofréquence utilisé dans un système de contrôle d'inventaire mettant en oeuvre plusieurs transpondeurs. Il comprend un premier circuit d'antenne pour la réception, un second circuit d'antenne pour l'émission. Le signal d'émission est dérivé de la fréquence de réception reçue par l'antenne de réception.

Le transpondeur transmet des informations en modulant une fréquence harmonique d'émission dérivée de la fréquence porteuse d'un lecteur. Cette fréquence harmonique est un multiple de la fréquence porteuse sans être synchronisée avec la fréquence porteuse.

Le brevet EP 0 926 855 décrit un transpondeur de communication radiofréquence alimenté par une batterie. Il comprend un circuit apte à basculer d'un mode de réception à un mode d'émission et vice versa. Le transpondeur comprend un circuit avec un microprocesseur, un seul condensateur et une seule antenne et des moyens de basculement pour former un circuit parallèle de réception LC ou un circuit série d'émission LC selon le mode de communication basculé. Le transpondeur répond en modulant un champ externe de lecteur avec lequel il est couplé.

Le brevet EP1898342A2 décrit un transpondeur adapté pour être utilisé dans un système de caisse ou de contrôle d'inventaire qui est agencé pour émettre en modulant et en rediffusant une fréquence de signal de transpondeur dérivée d'une fréquence porteuse reçue sur une antenne d'émission. Le transpondeur comprend une antenne bimode (L4) et des circuits (18) qui actionnent sélectivement l'antenne (L4) pour supprimer l'émission indésirable de la fréquence du signal du transpondeur lorsque le transpondeur n'émet pas. Un circuit de terminaison (22) est fourni qui supprime l'émission indésirable de la fréquence du signal du transpondeur par une partie démodulateur du transpondeur.

Le brevet US6356535B1 décrit un dispositif de communication qui comprend : une première antenne utilisable pour recevoir des signaux de communication sans fil ; une deuxième antenne ayant plusieurs conducteurs, la deuxième antenne pouvant fonctionner pour émettre des signaux de communication sans fil; une connexion comprenant plusieurs lignes conductrices ayant des premières extrémités et des deuxièmes extrémités respectives, la connexion étant couplée aux conducteurs de la deuxième antenne aux premières extrémités des lignes ; et un commutateur couplé aux deuxièmes extrémités de la connexion, le commutateur pouvant être actionné pour fournir l'un parmi un court-circuit sélectif et une isolation des conducteurs.

Le brevet US5621913A décrit un système de communication sans fil entre une pluralité de puces semi-conductrices.

L'invention a pour but de trouver une solution plus aisée et avantageuse au problème de couplage entre un lecteur et un objet de petites dimensions.

Résumé de l'invention.

L'invention propose de résoudre ce problème de couplage en générant indépendamment du lecteur au moins une des deux bandes latérales pour que le lecteur puisse détecter le signal de rétro-modulation provenant de l'objet sans contact (PICC). Le circuit de l'invention renvoie un signal porteur modulé par le signal de réponse par modulation de charge de l'objet sans contact ; De préférence, la modulation de ce signal porteur est amplifiée pour alimenter une antenne d'émission.

L'invention prévoit notamment de générer ou extraire une fréquence porteuse de communication à partir du champ d'un lecteur reçu sur une antenne réceptrice de données de l'objet sans contact et d'émettre une réponse par une modulation de cette porteuse réinjectée dans un étage d'émission comprenant une antenne d'émission distincte.

De meilleurs résultats de communication sont atteints avec des fréquences d'accord distinctes pour les circuits résonnants émetteur et récepteur.

A cet effet, l'invention a donc pour objet un circuit de communication sans-contact activée selon la revendication 1.

Selon d'autres caractéristiques du circuit :

- Les moyens d'émission (17) synchronisée sont configurés pour moduler un signal porteur dérivé ou extrait d'un champ électromagnétique de réception de données ;
- Le circuit est configuré pour communiquer selon au moins l'une des normes ISO/IEC 14443 ou 15693 ou 18092.
- Le circuit comprend une puce sans-contact et un étage d'adaptation de l'émission configuré pour amplifier un signal de réponse de la puce avant injection dans ladite seconde antenne d'émission ;
- L'étage d'adaptation réalise une fonction logique « ET » pour combiner un signal de porteuse et un signal de réponse avant amplification ;
- Lesdites antennes sont agencées entre elles de manière que leur inductance mutuelle soit minimisée notamment par un espacement ou atténuateur ; De préférence leur inductance mutuelle s'annule au moins en partie de manière à avoir une induction de courant négligeable dans l'antenne de réception provoquée par l'antenne d'émission ;
- Les antennes peuvent se chevaucher mutuellement en partie afin d'anéantir globalement le courant induit dans l'antenne réceptrice par l'antenne émettrice ; L'agencement d'antenne permet de minimiser une interaction de couplage entre les antennes, responsable de perturbations réciproques ou mutuelles. Un courant actif produit dans l'antenne réceptrice induit intempestivement un signal dans l'antenne de réception ; Cet agencement permet d'éviter une étape de traitement et/ou des filtres électroniques qui pourraient être utilisés alternativement à cet agencement préféré ;
- L'antenne de réception fait partie d'un circuit à résonnance parallèle et/ou l'antenne d'émission fait partie d'un circuit de résonnance série ; La résonance parallèle du circuit de réception permet une élévation de la tension recueillie par l'antenne ce qui est un avantage pour la détection des données, par contre la résonance série du circuit d'émission permet d'injecter un fort courant dans la bobine d'émission malgré une tension de fonctionnement faible ce qui est le cas notamment d'une carte micro SD ;
- Le circuit comprend une puce sans contact destinée à recevoir un signal de réception et un étage d'adaptation de la réception destiné à adapter le signal de réception aux caractéristiques de la puce ; L'étage d'adaptation de la réception peut être configuré pour extraire un signal de porteuse synchronisé à partir du signal de réception ;
- Le circuit est intégré dans ou constitue un objet ayant un facteur de forme d'une carte à circuit intégré ou très réduit tel une carte micro SD ou autre composant. Le circuit peut avoir au moins un connecteur correspond à celui d'un objet configuré pour connecter un dispositif hôte ; Ainsi, des dispositifs dépourvus de fonction sans contact peuvent en être pourvus grâce à l'invention.
- Le circuit comprend une boucle à verrouillage de phase PLL permettant de conserver artificiellement l'horloge du champ incident lorsque le circuit résonnant parallèle est découplé ;
- Les première et seconde antennes peuvent constituer une seule et même antenne ;
- Les fréquences d'accord des circuits résonnants en réception et en émission sont sensiblement différentes et respectivement centrées sur 13.56 MHz et 14.4 MHz.

L'invention a également pour objet un procédé de communication sans-contact activée selon la revendication 12.

Grâce à l'invention on réalise un bon couplage entre un lecteur et un objet de type PICC (carte SD) ; En outre, il est facile à mettre en oeuvre avec un minimum de modification ; L'invention s'applique notamment à toute puce à interface duale habituelle (avec ou sans oscillateur).

Brève description des figures.

- La figure 1 illustre une carte SD comprenant le circuit conforme à un mode de réalisation de l'invention ;
- La figure 2 illustre une vue plus détaillée du circuit radiofréquence RF de la figure précédente ;
- La figure 3A illustre un premier mode de réalisation d'un étage de réception de la figure 2 ;
- La figure 3B illustre un second mode de réalisation d'un étage de réception de la figure 2 ;
- La figure 4 illustre un mode de réalisation d'un étage d'émission de la figure 2 ;
- Les figures 5 et 6 illustrent une antenne de réception agencée par rapport à une carte micro SD et des valeurs de circuit équivalents de l'antenne ;
- La figure 7 illustre le niveau de modulation par le composant radiofréquence SE (5) ;
- La figure 8 illustre un filtre d'extraction du signal de réponse du composant 5 à partir de la porteuse de la figure précédente ;
- La figure 9 illustre un circuit de combinaison de la porteuse et du signal de réponse seul ;
- La figure 10 illustre un circuit LC relatif à l'antenne d'émission ;
- La figure 11 illustre des valeurs des réactances $X_L$ et $X_C$ à partir respectivement de l'inductance et de la capacité en fonction de la fréquence ;
- La figure 12 illustre un agencement d'une antenne d'émission par rapport à une carte micro SD et un agencement des deux antennes entre elles.
- La figure 13 illustre un mode de réalisation de l'invention dans lequel les interfaces de réception et d'émission sont opérationnelles à tour de rôle et qui utilise des moyens particuliers de génération de champ électromagnétique émetteur synchronisé avec le champ de réception d'un lecteur.

Description détaillée.

Par communication activée, on entend une communication sans contact dans laquelle la réponse d'un transpondeur s'effectue par émission d'un champ électromagnétique propre au transpondeur, de préférence amplifié. Cette émission est en fait obtenue par l'émission à une puissance déterminée d'un signal porteur modulé par un signal du transpondeur.

L'énergie de l'amplification et/ou de fonctionnement du transpondeur émetteur / récepteur est de préférence fournie par une source d'énergie externe distincte du lecteur.

Typiquement, la communication ou le circuit sans contact sont conformes à la norme ISO/IEC 14443 et/ou ISO/IEC 15693 ou tout autre protocole s'appuyant sur une fréquence d'excitation du champ électromagnétique à 13.56 MHz. Le circuit est alimenté par une source de courant.

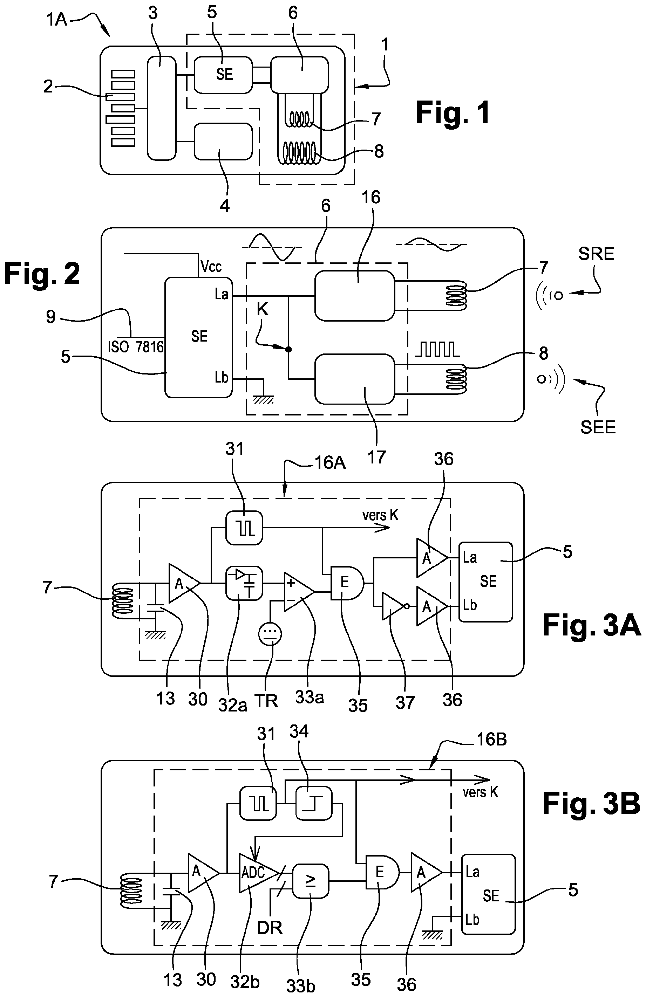

A la figure 1 est schématisé un exemple de réalisation d'un circuit de communication sans contact 1 conforme à l'invention équipant une carte à mémoire 1A. Toutefois, tout autre objet communiquant peut à priori en être équipé, par exemple, clé USB, carte PCMCIA... téléphone, PDA, ordinateur.

L'objet peut ou non être amovible par rapport à un dispositif hôte ou y être fixé à demeure notamment soudé sur une carte à circuit imprimé. Le circuit ou l'objet peut le cas échéant prévoir des connexions d'antenne externes plutôt que de les supporter.

La carte à mémoire 1 comprend de manière connue des plots de contact 2, un microcontrôleur 3, une mémoire de masse 4 (NAND) reliée au microcontrôleur. La carte comprend en outre un élément de traitement de communication 5 ; Il est de préférence de type à interface duale (configuré pour gérer une communication de type contact, par exemple ISO 7816-3 et sans contact ISO-14443 (SE)); Ce composant ou élément 5 (SE) est de préférence sécurisé comme une puce de circuit intégré connue du domaine de la carte à puce ; Il peut être doté, le cas échéant de fonctionnalités cryptographique et/ou anti-fraude, anti-intrusion, etc.

Le composant SE est relié au microcontrôleur 3 par un port d'entrée/sortie ; Le composant de sécurité SE est connecté à un circuit 6 d'interface CL actif ; Ce composant 6 reçoit deux antennes 7, 8, respectivement de réception et d'émission.

Dans son principe, on observe que l'invention comprend des moyens RF supplémentaires 6, 7, 8 ajoutés à l'élément sans contact SE afin de compenser la taille particulièrement réduite de l'antenne puisque logée dans une carte micro SD ou mini SD ou dans un objet d'encombrement sensiblement équivalent.

Selon une caractéristique d'un mode de réalisation de l'invention, les moyens d'émission 5, 6, 7, 8 sont configurés pour moduler un signal porteur 25. Ce signal porteur est ici de préférence dérivé ou extrait du champ magnétique reçu d'un lecteur externe.

Dans l'exemple, le circuit radiofréquence 6 réalise des activités fonctionnelles de réception et d'émission du champ électromagnétique ci-après ; Il capte notamment le champ radiofréquence RF externe provenant d'un lecteur sans contact pour, si nécessaire, le rendre compatible au composant sécurisé SE (tension, etc.) ; Il amplifie la réponse de l'élément sécurisé SE destinée à être écoutée par le lecteur externe.

La figure 2 décrit plus en détail le composant SE (5) et ses liaisons. Le circuit SE de ce mode comprend des moyens de connexion à une source d'énergie externe.

Dans l'exemple, le composant SE comprend une interface à contact, par exemple conforme au standard ISO-7816 symbolisé par un faisceau de connexions 9 ; il comprend un plot d'alimentation Vcc, et des plots La, Lb reliés respectivement à une interface active 6 et à la masse. Le composant SE est configuré pour moduler une charge d'impédance en réponse à une réception des trames sans contact reçues sur ses plots La, Lb.

L'interface active 6 comprend un circuit 16 de conditionnement du signal de réception SRE et un circuit 17 générateur de pulses pour émettre un signal d'émission SEE. Chaque circuit 16, 17 est relié au plot (La) du composant de traitement 5.

Conformément à un mode de réalisation de l'invention, les moyens d'émission 5, 17 sont configurés pour moduler un signal porteur. Le signal porteur résulte de préférence d'une dérivation ou extraction du champ magnétique reçu SRE.

Horloge et réception des données.

Selon un mode de mise en oeuvre, le procédé comprend une étape de réception de la fréquence porteuse générée par le lecteur ; La fréquence porteuse est reçue par une antenne de réception dédiée 7. L'antenne 7 reçoit en fait le champ électromagnétique émis par le lecteur comprenant la fréquence porteuse modulée. La fréquence est dans l'exemple de 13,56 MHz mais elle pourrait être tout autre selon le type de communication ou protocole s'appuyant sur cette fréquence de 13.56 MHz de courte ou moyenne portée inférieure notamment à 10 m, 1 m ou 0,1 m voire même proche de 0.

Toutefois, l'invention n'exclut pas de générer un signal porteur autrement, par exemple à partir d'un signal d'horloge ou signal interne d'un dispositif hôte ou de l'objet.

Cette étape de réception a également pour objectif de collecter les données envoyées par le lecteur à l'objet sans contact. Un étage électronique comprenant un circuit de réception dédié peut être élaboré dans ce but notamment pour adapter la tension.

Le procédé peut également mettre en oeuvre une étape d'adaptation à travers un étage d'adaptation de réception (16) pour adapter le signal de réception SRE à la puce 5 ; Le procédé peut cumulativement ou alternativement effectuer dans cet étage une extraction d'un signal de porteuse synchronisée 25 du signal de réception SRE.

A la figure 3A est illustré un premier mode de réalisation 16B détaillé de l'étage 16. L'étage de réception 16A comprend l'antenne de réception 7 ici relié au plot 'La' de la puce via un circuit de réception décrit ci-après.

Le signal reçu par cette antenne peut être amplifié avant extraction du signal d'horloge correspondant au signal de la porteuse ; A cet effet, le circuit comprend un amplificateur 30 relié à l'antenne et à la sortie de cet amplificateur est relié un extracteur d'horloge 31 ;

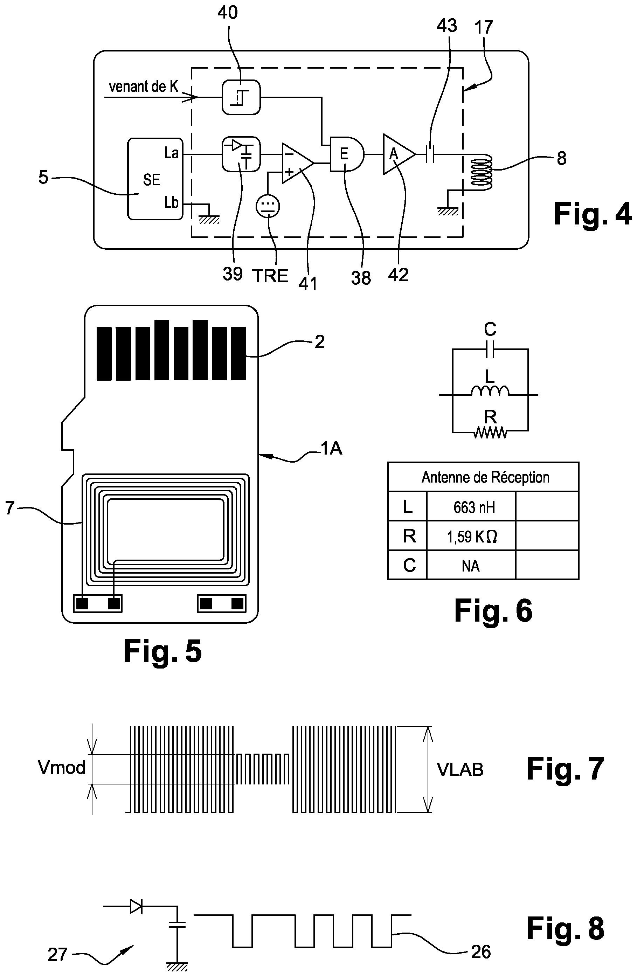

Le signal d'horloge obtenu 25 en sortie de l'extracteur est envoyé par une liaison (K) sur un circuit générateur de pulse ou étage d'adaptation d'émission 17 détaillé à la figure 4. La sortie de l'extracteur d'horloge 31 est par ailleurs également reliée à un circuit logique 35 réalisant une fonction « ET ».

L'étage 16A comprend ici également un démodulateur 32a recevant le signal de réception SRE amplifié par l'amplificateur 30 relié à un circuit de comparaison 33a pour comparer le signal obtenu démodulé à une tension de référence (TR).

Ensuite, le signal de sortie du comparateur 33a est combiné avec le signal d'horloge 25 venant de l'extracteur d'horloge 31 au niveau d'un composant 35 réalisant une fonction 'ET' logique ; Une première branche de la sortie du composant 35 peut passer par un amplificateur 36 avant d'être injecté dans le plot 'La' de la puce 5.

Une seconde branche de la sortie du composant 35 peut passer par un inverseur puis un amplificateur 36 avant d'être branché sur le plot 'Lb' de la puce.

A la figure 3B est illustré un second mode de réalisation 16B de cet étage 16 et dans lequel le composant 5 utilisé est encore une puce à interface duale contact et sans-contact (combi). Les mêmes numéros d'une figure à l'autre représentent des éléments identiques ou sensiblement similaires.

Dans cette variante, le circuit d'extraction d'horloge 31 se connecte également à un déphaseur 34 avant d'agir sur le convertisseur analogique/ numérique 32b.

L'étage ou circuit de réception 16B est d'une part branché à l'antenne de réception 7 reliée ici au plot 'La' de la puce. Le circuit 16B peut comprendre un condensateur 13 disposé aux bornes des plots 'La' et 'Lb' de la puce. Cette capacité permet d'avoir un bon facteur de qualité. Le circuit résonant de l'antenne de réception est réalisé sur le principe d'un circuit parallèle.

A la différence avec le circuit 16A, le démodulateur 32a est remplacé par un convertisseur analogique/digital 32b, le comparateur 33a est remplacé par un comparateur digital 33b avec une valeur digitale de référence (DR) et le plot 'Lb' est branché à la masse au lieu de recevoir le signal de sortie de circuit « ET » inversé et amplifié respectivement par un inverseur 37 et un amplificateur 36.

En outre, ce circuit comprend un déphaseur 34 sur une branche de sortie de l'extracteur d'horloge 31. Ce déphaseur se branche ensuite sur le convertisseur analogique/numérique 32b.

Ainsi, ces étages 16A ou 16B permettent chacun d'extraire le signal d'horloge 25 et d'adapter le signal à la puce 5. Après réception et amplification, le signal porteur est dirigé sur l'entrée RF de la puce Combi 5 en utilisant les plots d'interface La / Lb. Un condensateur supplémentaire 18 peut être ajouté à l'interface afin d'adapter l'impédance d'entrée.

Les étages électroniques 16A et 16B fonctionnent de la manière ci-après :
Le signal SRE reçu par l'antenne 7 peut être assez faible compte tenu de la petite surface de couplage de l'antenne 7 dans un support tel qu'une mini carte SD.

Ce signal est amplifié par l'amplificateur 30 avant d'être démodulé par le démodulateur 32a ou convertisseur analogique/numérique 32b ; Un signal utile extrait et calibré par le comparateur est combiné par la porte (ET) 35 avec le signal d'horloge extrait par l'extracteur d'horloge 31. En sortie de la porte 35, le signal radiofréquence reconditionné est injecté dans le composant 5 en étant au préalable amplifié en mode différentiel grâce à l'inverseur 37 et aux amplificateurs 36.

Parallèlement, l'alimentation Vcc de la puce côté contact ISO 7816 peut être désactivée par un circuit adéquat (non représenté) pendant la présence d'un champ électromagnétique SRE. Ce dernier circuit peut être compris dans le circuit 16A ou 16B. L'actionnement peut être manuel.

Ces derniers peuvent avoir de préférence leurs composants (30, 36, 32a...) alimentés en tension par une alimentation provenant des contacts 2 en relation avec un dispositif hôte.

Le circuit 16B fonctionne sensiblement pareil ; Toutefois le déphaseur 34 permet de régler de manière précise les déclenchements d'acquisition du signal radiofréquence afin de convertir l'enveloppe du signal reçu en signal numérique par le convertisseur 32b.

La puce « Combi » 5 peut être alimentée par ses plots de contacts ISO/IEC 7816 Vdd et Vss et peut ou non utiliser de l'énergie qui lui est procurée par le champ selon l'utilisation et le montage électronique de l'invention. La puce peut aussi être alimentée par une tension qui serait générée à l'image du champ RF ou par le circuit 16 lui-même qui serait alimenté par les contacts 2 d'un dispositif hôte.

L'avantage de cette dernière option est pour le composant 5 de voir son alimentation gérée par l'étage 16 en fonction de la présence ou non du champ et le cas échéant de réinitialiser la puce 5.

À ce stade, l'amplitude de tension VLab est au moins de 3.3 Vpp (Volts crête-crête). Cette valeur est nécessaire pour que la puce de l'exemple détecte l'horloge de 13,56 MHz et puisse extraire des données provenant du lecteur.

A titre d'exemple, le tableau suivant indique la tension requise par deux puces actuelles exemple P5CD072 de Philips / NXP ou 66CLX800 de la société Infineon pour détecter l'horloge et les données provenant de champ extérieur.

| Puce | Puce sans contact Vcc = 3v | Puce sans contact Vcc = 2,7v |
|---|---|---|
| Vmin (Vpp) | 3,48 | 3,53 |
| Vmax (Vpp) | 6,87 | 6,22 |
| Duty Cycle (%) | 7,7 | 7,7 |

Antenne de <u>réception (fig. 5, 6)</u>.

La dimension de l'antenne de réception 7 est aussi large que possible dans la limite de la surface disponible dans l'objet. Dans le cadre d'une surface disponible sur une carte micro SD, les résultats ci-dessous ont été retenus. L'inductance est de préférence sélectionnée de façon à être accordée par un condensateur supplémentaire de faible valeur afin de limiter la taille du condensateur.

L'antenne de réception peut par exemple avoir une surface $5 \times 5$ mm$^2$ et comprendre 4 à 6 spires. L'antenne peut être réglée à 13,56 MHz avec un facteur de qualité Q de 10. Un circuit parallèle peut être sélectionné de manière à obtenir une tension maximale aux bornes du circuit d'antenne. Les caractéristiques suivantes d'antenne ont été sélectionnées avec le circuit équivalent de la figure 6 avec L : 663 nH et R : 1,59 K$\Omega$ ; C n'étant pas applicable.

Les performances de l'antenne mesurées avec une telle antenne avec le schéma équivalent de la figure 6 sont données dans la table ci-dessous.

Ls = 663 nH ; Rs = 1,59 KΩ ; C1 = 180 pF ;
C2 = 18 pF ; Rc = 270 KΩ ; Cp = 9,5 pF ; Rp = 1 MΩ.

| Intensité du champ | Puce sans contact Vcc = 2,7v |
|---|---|
| 1,5 A/m | 1,01 Vpp |
| 4,5 A/m | 3,00 Vpp |
| 7,5 A/m | 5,09 Vpp |

La tension attendue avec cette antenne est supérieure à 1Vpp (Volt crête à crête). Le champ minimum crée une tension supérieure à 1Vpp, pas assez pour permettre à la puce combi 5 de détecter le signal. C'est pourquoi, dans l'exemple de réalisation avec une carte micro SD, on a de préférence introduit un étage d'amplification. Cet étage d'amplification pour la réception de l'horloge est ici supérieur à 10 dB, le gain en tension étant égal à 3. Cette amplification peut ne pas être nécessaire dans d'autres circonstances ou pour d'autres puces.

Le niveau de sortie de l'étage de conditionnement 16 est compris entre 3 Vpp et 14 Vpp. Le gain peut être compris entre 5 et 20dB.

La coupure d'alimentation de la puce ou la fonction RESET peuvent être déclenchées aussi par tout moyen, tel un interrupteur dans le dispositif hôte ou sur le circuit d'alimentation de la puce. La puce se réinitialise automatiquement lors de sa mise sous tension.

Bande latérale et modulation (fig. 7-10).

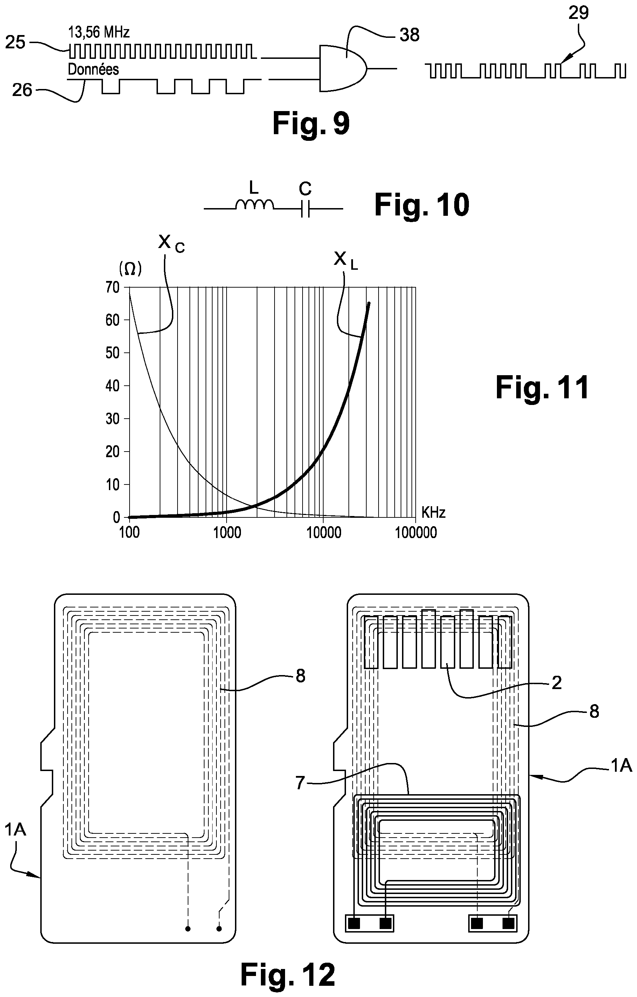

Dans l'exemple (fig. 9), lorsque la puce combi 5 reçoit le signal porteur (ou la porteuse) ainsi que le signal de données, par le biais de ses plots La /Lb, elle génère un signal de modulation de charge afin de transmettre une réponse au dispositif ou terminal en relation de communication avec elle. L'amplitude du signal de modulation Vmod est ici environ la moitié de l'amplitude de la porteuse VLAB lorsque le condensateur est bien adapté.

Un condensateur de 10 à 60pF aux bornes des points La, Lb de la puce peut être utilisé à cet effet. Cette valeur peut varier selon le type de puce. Ainsi on obtient les tensions VLAB et Vmod égales respectivement à 3,3 Volts crête-crête et à 1,6 Volts crête-crête.

À cette étape, deux options sont envisagées. La première plus simple est d'utiliser ce signal tel qu'il se présente puis, de préférence, de l'amplifier dans un étage d'amplification forte puissance avant d'injecter le signal dans un circuit d'adaptation ou d'activation de l'émission 17 avant l'antenne émettrice 8. Différents moyens d'amplification connus de l'homme de l'art peuvent être utilisés.

Dans un autre exemple (fig. 8) conforme à une seconde option, le signal porteur pour l'émission est supprimé afin de conserver les données numériques 25. A cet effet, on peut utiliser par exemple un filtre passe-bas 27 de la figure 8.

Par la suite (fig. 9), on effectue une modulation de préférence à 100 % en combinant le signal de données 25 avec une porteuse 26 à 13,56 MHz. Ceci peut être réalisé à l'aide de la porte (ET) logique 38 ou d'un tampon amplificateur 42 ou d'un montage à transistor réalisant la même fonction. Après une amplification de puissance, le signal obtenu 29 est utilisé pour alimenter l'antenne de sortie 8.

Ainsi, plutôt que d'amplifier l'ensemble comprenant la porteuse 25 et le signal 26 ou la porteuse seule 25 même quand il n'y a pas de signal, l'invention prévoit d'amplifier le signal et la porteuse uniquement lorsqu'il y a du signal de réponse. Par exemple, ici sur la figure 9 le signal 29 utile est amplifié quand le signal de donnée est à un niveau haut. Lorsqu'il n'y a pas de signal, (ligne de donnée à un niveau zéro ou proche de zéro), aucun signal ne sort de la porte 38. Il n'y a pas d'amplification et perte d'énergie inutile de la porteuse seule avant d'alimenter l'antenne d'émission.

La figure 4 illustre une option préférée de réalisation relativement simple permettant d'obtenir de bons résultats et mettant en oeuvre pour partie la seconde option; Selon cette option préférée, l'étage d'adaptation 17 comprend une porte logique « ET » 38 ou circuit équivalent pour combiner un signal de porteuse 26 (fig.9) et un signal de réponse 25 ou d'émission de la puce 5 avant amplification.

Plus en détail dans le circuit 17, le plot 'La' de la puce 5 est connecté à un démodulateur 39 (qui peut être du même type que le circuit 27 ou 32a) pour recevoir un signal de réponse modulé de la puce 5 ; Ensuite, la sortie du démodulateur 39 relie un comparateur 41 qui compare le niveau de tension reçue à un niveau de tension de référence (TRE) ceci afin de numériser le signal utile. La sortie du comparateur 41 portant le signal de réponse utile de la puce 26 se trouve branchée sur l'une des entrées du composant 38 réalisant la fonction 'ET' logique pour combiner le signal de porteuse 25 avec le signal de réponse 26 de la puce.

La porteuse 25 provient du point K de l'étage d'adaptation de réception et d'extraction 16A ou 16B ; La porteuse est injectée via une liaison à l'autre plot d'entrée du composant 38 réalisant la fonction 'ET' logique ; Le signal d'horloge est de préférence déphasé par un déphaseur 40 de manière à synchroniser ou caler de manière optimale les signaux d'horloge avec la porteuse du signal radiofréquence générée par un dispositif lecteur afin de produire une rétro-modulation maximale. La fréquence d'émission du circuit de l'invention est donc synchronisée en phase avec la fréquence du champ émis par le lecteur.

Le circuit 17 comprend de préférence un circuit tampon ou amplificateur 42 pour amplifier le signal 29 en sortie du composant 38 avant de l'injecter dans l'antenne d'émission 8. Le circuit d'antenne utilisé forme avec un condensateur 43 un circuit résonant série.

Certains composants de l'étage 17 peuvent de préférence être alimentés en tension, pour leur fonctionnement, par une source d'énergie provenant du dispositif hôte via les contacts 2. D'autres sources connues de l'homme de l'art ne sont pas exclues.

Le circuit 17 fonctionne comme ci-après. Après que la puce ait reçu sur ses points La, Lb des trames radiofréquences SRE de préférence reconditionnées au préalable, la réponse de la puce par modulation de charge est reçue et démodulée dans le démodulateur 39 ; Puis un signal utile est numérisé par le comparateur de seuil 41 avant d'être injecté dans le circuit (ET) 38 et combiné à une porteuse 25 extraite ou dérivée du champ reçu SRE provenant du point K. Le cas échéant, le circuit 17 peut comprendre un extracteur d'horloge similaire à 31 prélevant le signal comme aux figures 16A ou 16B.

Le signal de réponse 29 résultant du circuit 38 est ensuite amplifié de préférence par l'amplificateur 42 avant d'être injecté dans l'antenne émettrice à résonance série 8.

Puissance de l'amplification tampon de sortie.

De manière à compenser la faible surface de l'antenne émettrice dans la carte SD (ou autre substrat), on peut utiliser un amplificateur tampon de sortie 42 qui délivre de préférence un courant minimum allant de 60 à 80 mA sous la tension d'alimentation apportée. De bons résultats sont obtenus avec une puissance supérieure à 200 mW.

Un avantage de ce traitement est notamment de limiter la consommation d'énergie au niveau de l'amplification lorsqu'il n'y a pas de signal réponse de la puce 5. Il est en effet inutile d'amplifier le signal de la porteuse seul quand il n'y a pas de réponse ou de signal à émettre dans l'application envisagée.

Antenne de sortie & accord de fréquence (fig. 10, 11).

Les antennes 7, 8 comprennent dans l'exemple des spires disposées à plat sur un même substrat (ou deux substrats distincts) comme illustré sur les figures notamment 3 et 13. Tout moyen connu de réalisation d'antenne par l'homme de l'art peut être utilisé comme la gravure, l'incrustation de fil par ultrasons, etc.

Lorsque le système est alimenté par une basse tension (3,3 V), l'antenne de sortie est conçue de manière à réaliser une résonance série. Lorsque le système est alimenté par un courant fort, la tension entre le circuit LC total sera relativement faible, quand une tension élevée est présente sur chaque composant L et C.

La courbe illustrée à la figure 11 représente des valeurs obtenues de réactance XL en fonction de l'inductance et ainsi des valeurs de réactance XC en fonction d'un condensateur selon la fréquence en application des formules ci-dessous.

$$Xc = \frac{1}{2 \cdot \pi \cdot f \cdot C} \qquad\qquad X_L = 2 \cdot \pi \cdot f \cdot L$$

Au point d'intersection entre les deux courbes, les réactances XL et XC sont égales. F est la fréquence de résonance série du circuit.

À ce point, la tension aux bornes du circuit LC (fig. 10) est minime quand l'intensité du courant est maximale. Comme le flux magnétique est directement dépendant de l'intensité du courant, cette résonance série est un moyen de créer un champ magnétique élevé sur l'antenne émettrice 8 bien qu'elle soit alimentée par une faible tension.

Cela constitue un moyen d'augmenter la puissance du signal du transpondeur 5 malgré la petite dimension de l'antenne sur le substrat.

Caractéristiques de l'antenne d'émission (fig. 12).

Selon le mode de réalisation de l'invention, le circuit comprend des antennes distinctes de réception et d'émission ; Les antennes sont agencées entre elles de manière que leur inductance mutuelle soit minime ou s'annule au moins en partie. De préférence, on choisit l'agencement de manière à avoir une induction de courant dans l'antenne de réception minime notamment inférieure au seuil du gain de l'étage de réception 16. Par exemple, avec un gain de 3 on prévoit d'agencer les antennes entre elles de manière à avoir une tension inférieure à 300 mV).

Dans une variante (non représentée), les antennes sont protégées l'une de l'autre en étant écartées l'une de l'autre et/ou par blindage.

Dans une autre variante, les antennes se chevauchent et on prévoit des moyens électroniques de protection tels des filtres configurés pour éviter des perturbations mutuelles.

Dans le mode avantageux de réalisation, la dimension de l'antenne émettrice 8 est plus grande que l'antenne de réception. L'antenne est par exemple située sur le côté arrière de la μSD comme illustré à la figure 12. Ses caractéristiques utilisées dans l'exemple sont : L = 1,05 μH ; R = 939 Ω ; C = 2,69 pF.

Afin d'éviter la diaphonie entre les antennes du fait d'un couplage entre elles inévitable, on procède à un agencement des antennes de telle manière que l'inductance mutuelle entre les deux antennes soit réduite au minimum. Différentes solutions sont possibles notamment isoler une antenne par rapport à l'autre, désactiver une antenne pendant que l'autre est active et vice versa.

Selon un mode préféré, cette caractéristique de mutuelle induction minimisée est obtenue par un chevauchement ou superposition des deux antennes. L'antenne de réception 7 plus grande dans l'exemple est agencée de manière à avoir sensiblement une partie disposée en dehors de la périphérie externe de l'antenne d'émission ; De préférence l'antenne de réception 7 est sensiblement montée à cheval à moitié sur un côté et à l'intérieur de la périphérie de l'antenne d'émission 8 et à moitié en dehors de la périphérie de l'antenne d'émission.

Ainsi, grâce à cette disposition particulière, on a deux antennes dont la résultante de l'inductance mutuelle est globalement nulle ou du moins minimisée.

Lorsque l'antenne d'émission émet un champ électromagnétique, une partie du flux F traverse dans un sens X une partie A de l'antenne 7 située en regard de l'intérieur de l'antenne d'émission 8 générant un courant induit (i) dans l'antenne 7 ; En même temps, une autre partie du flux F traverse une partie B de l'antenne 7 située en dehors de la surface de l'antenne d'émission 8 dans un sens Y contraire à X générant un courant induit (j) contraire à (i).

Ainsi par un chevauchement partiel des antennes, on diminue au moins la valeur d'une perturbation provoquée par l'antenne émettrice 8 sur l'antenne réceptrice 7.

La perturbation induite dans l'antenne réceptrice par l'antenne émettrice s'annule d'elle-même au moins en grande partie. La résultante peut être sensiblement globalement nulle selon le positionnement adéquat des antennes et leurs caractéristiques. L'efficacité d'une auto-annulation peut dépendre de l'environnement immédiat extérieur à l'antenne comme par exemple, l'environnement métallique d'un téléphone ou dispositif hôte de l'objet 1. Les antennes peuvent être sur une même face d'un substrat en étant isolée l'une de l'autre ou sur des faces opposées. Les antennes peuvent être aussi agencées sur des supports distincts parallèles entre eux.

L'invention peut prévoir de mettre en oeuvre des éléments suivants pour les avantages décrits :

- Des moyens de récupération ou d'extraction de la porteuse du champ magnétique reçu pour permettre une fonction active de modulation sans oscillateur avec des puces classiques sans contact (non NFC) ;

- un agencement d'antennes séparées à mutuelle inductance nulle ou quasi nulle simplifiant le circuit ;

- La mise en oeuvre de deux sortes de résonance (de préférence de type parallèle pour la réception) et de préférence de type série pour l'émission, pour une meilleure efficacité ;

- Un circuit d'adaptation de niveau 16 connecté à la puce 5 combi permettant l'usage des puces existantes, notamment les puces à interface duale (combi bancaire) qui sont déjà certifiées et sans aucune modification par simplification et par commodité industrielle ; En particulier, on prévoit l'usage de l'interface antenne La/Lb de la puce combi existante (notamment de la société Infineon SLE 66CLX800PE) pour moduler/démoduler ;

- En outre, l'invention s'affranchit du recours à une puce ou composant de type NFC avec notamment un oscillateur intégré. Par exemple, une puce sans contact répondant à la norme à la norme ISO/IEC 14443 et /ou ISO/IEC 15693 peut être utilisée.

- Le circuit peut comprendre un détecteur configuré pour fournir un signal représentatif de la présence d'un champ magnétique externe et déclencher un mode de fonctionnement parmi au moins un mode contact et mode sans-contact.

- En variante, l'une et/ou l'autre des antennes du circuit peut être déjà intégrée (s) dans un dispositif hôte, le circuit de l'invention sans les antennes venant simplement se brancher à l'une des antennes via un connecteur (non représenté) pour plus d'adaptabilité du circuit à des dispositifs hôtes.

Ainsi, l'invention prévoit tout dispositif ou appareil de communication comprenant le circuit décrit précédemment qu'il soit sous forme amovible ou pas.

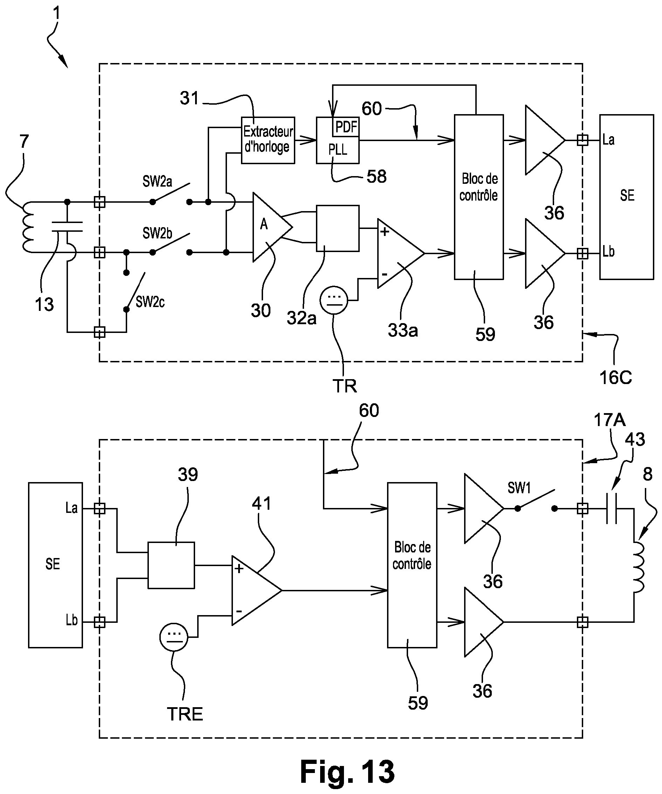

A la figure 13 est illustré un mode préféré de réalisation de l'invention dans lequel les circuits d'émission / réception sont désaccouplés l'un par rapport à l'autre ; Les composants référencés de la même manière étant identiques ou similaires à ceux des autres figures.

Le circuit de communication 1 de l'invention comprend ici une interface (ou étage) d'émission 17A / réception 16C raccordé à deux antennes 7 et 8. Cet étage d'émission/réception comprend un bloc de contrôle 59 de découplage dynamique des antennes 7 et 8 et/ou de leur circuit résonnant respectif 8, 43 et 7, 13. Ce bloc de contrôle comprend des connexions venant des deux étages 17B et 17A notamment une connexion 60 avec le bloc PLL 58.

Le circuit de communication 1 comprend un circuit résonnant parallèle de réception, constitué d'une antenne 7 accordée par la capacité 13 à la fréquence de la porteuse. L'antenne 7 est raccordée au dispositif 16C.

Un circuit résonnant série d'émission comprend une antenne 8 accordée par la capacité 43 sensiblement à la fréquence de la porteuse 13,56 Mhz(ou à une fréquence différente 14,4 Mhz selon un mode préféré ci-dessous).

Afin d'éviter tout couplage inductif entre le circuit de réception 7, 13 et le circuit d'émission 8, 43, pouvant altérer considérablement les performances de chacun des circuits selon le positionnement des antennes l'une par rapport à l'autre, on découple volontairement et alternativement chaque circuit résonnant (7, 13) et (8, 43).

Selon le présente invention, le circuit de communication est agencé de manière à désactiver le premier circuit résonnant de réception 7, 13 avec la première antenne 7 pendant que le second circuit résonnant d'émission 8, 43 avec la seconde antenne 8 est actif et vice versa.

Selon ce principe, dans ce mode de réalisation :

- Un interrupteur analogique SW2c est placé dans le circuit de communication et permet de découpler l'antenne de réception 7 de la capacité d'accord 13 et du reste du circuit ; Et deux interrupteurs analogiques SW2a et SW2b permettent de découpler l'antenne de réception 7 du reste du circuit 16C, 17A;

- L'antenne d'émission 8 est placée en série avec capacité d'accord 43, le tout étant raccordé à l'étage 17A par des connexions à broches éventuellement démontables ou à soudure.

Un interrupteur analogique SW1 placé dans l'étage 17B permet de découpler l'antenne d'émission du reste du circuit d'émission (A) notamment au niveau d'un des amplificateurs ou tampons de sortie 36.

A noter que dans une variante de réalisation, il est possible de ne pas avoir l'interrupteur analogique SW1 ; L'ouverture du circuit résonnant peut par exemple être effectuée en plaçant au moins l'un des tampons (Buffers) de sortie 36 en mode haute impédance (HiZ).

Le dispositif fonctionne de la manière suivante sous le contrôle du bloc de contrôle 59 commun au deux étages 16C et 17A:

- En mode de réception, (mode ici par défaut ou au repos dans cet exemple), l'interrupteur analogique SW1 est ouvert afin de découpler le circuit résonnant série 8, 43. Les interrupteurs analogiques SW2a, SW2b, SW2c sont quant à eux fermés afin de réceptionner le maximum de champ SEE.

- En mode d'émission, l'interrupteur analogique SW2a, SW2b, SW2c sont ouverts afin de découpler le circuit résonnant parallèle 7, 13. L'interrupteur analogique SW1 est quant à lui fermé afin d'émettre le maximum de champ SEE.

Ce mode de réalisation autorise donc une désactivation du circuit de réception durant l'émission de trames, ce qui implique la perte temporaire du signal d'horloge du champ incident. Or dans le cadre d'un dispositif de type à communication sans contact activée selon l'invention, il est nécessaire que le dispositif demeure synchronisé avec l'horloge du champ pour qu'il puisse émettre des trames synchrones.

A cet effet, le dispositif selon ce mode préféré peut disposer de préférence d'une boucle à verrouillage de phase PLL (Phase Locked Loop) 58 placée ici en aval du circuit d'extraction d'horloge 31 permettant de conserver artificiellement l'horloge du champ incident lorsque le circuit résonnant parallèle est découplé.

De plus, afin de limiter une éventuelle désynchronisation de la PLL dans le temps, liée à la perte d'horloge (signal de référence de la PLL), le dispositif peut de préférence désactiver volontairement un détecteur de Phase/Fréquence PFD de la PLL durant le mode d'émission, qui tourne alors en mode libre.

Par exemple, un signal de réponse provenant de la puce SE parvient au bloc de contrôle qui est détecté pour désactiver le détecteur de phase PFD en mode émission.

Le bloc de contrôle logique 59 est capable d'inhiber la réception et l'émission en agissant sur les interrupteurs comme expliqué ci-dessus. Les interrupteurs SW2a, SW2b, SW2c peuvent être par défaut fermés (en mode réception) tandis que SW1 est en position ouvert, puis lors de l'émission d'une réponse par la puce SE, le bloc de contrôle détecte un signal de réponse de la puce et peut provoquer une configuration d'émission ci-après.

Le bloc de contrôle 59 pilote le basculement des interrupteurs SW1 et (SW2a, SW2b, SW2c) pour être respectivement en position fermé et ouvert, pilote la désactivation du détecteur de Phase/Fréquence PFD du composant PLL 58 durant le mode d'émission, et permet la fourniture de la fréquence porteuse du bloc PLL 58 pour générer des pulses.

A la fin de l'émission, le bloc de contrôle 59 opère en sens inverse à ci-dessus et place les interrupteurs en position par défaut pour un mode de réception.

En outre, de manière avantageuse, les inventeurs ont trouvé que les fréquences d'accord du circuit de réception et du circuit d'émission devraient être de préférence différentes respectivement centrées sur 13.56 MHz pour la réception et sur 14.4 Mhz pour l'émission de manière à favoriser la communication.

## Revendications

1. Circuit de communication sans-contact (1) activée comprenant des moyens de réception et d'émission d'un champ électromagnétique véhiculant des données (5, 6, 7, 8), un premier circuit résonnant (7, 13) avec une première antenne (7) pour la réception de données et un second circuit résonnant (8,43) avec une seconde antenne (8) pour l'émission de données, lesdits premier et second circuits résonnants étant distincts l'un de l'autre,

   **caractérisé en ce que** ledit circuit (1) est configuré pour effectuer une synchronisation de phase, en changeant la phase d'une fréquence d'émission, de manière que ladite émission de données s'effectue à une fréquence d'émission synchronisée en phase avec la fréquence du champ électromagnétique de réception, et
   **caractérisé en ce que** ledit circuit (1) est agencé de manière à désactiver le premier circuit résonnant avec première antenne pendant que le second circuit résonnant avec la seconde antenne est actif et vice versa.

2. Circuit de communication selon la revendication précédente, caractérisé en que les moyens d'émission (17) synchronisée sont configurés pour moduler un signal porteur dérivé ou extrait d'un champ électromagnétique de réception de données.

3. Circuit selon la revendication 1, **caractérisé en ce qu'**il est configuré pour communiquer une réponse de transpondeur sans contact selon au moins l'une des normes ISO/IEC 14443 ou 15693 ou 18092.

4. Circuit selon l'une quelconque des revendications précédentes, **caractérisé en ce que** lesdites antennes sont agencées entre elles de manière que leur inductance mutuelle soit minimisée par leur espacement ou atténuateur ou s'annule au moins en partie, de manière à avoir une induction de courant négligeable dans l'antenne de réception provoquée par l'antenne d'émission.

5. Circuit selon la revendication précédente, **caractérisé en ce que** les deux antennes (7, 8) sont partiellement en regard l'une de l'autre en étant agencées notamment sur deux plans horizontaux sensiblement parallèles.

6. Circuit selon l'une quelconque des revendications précédentes, **caractérisé en ce que** l'antenne de réception (7) fait partie d'un circuit à résonnance parallèle et/ou l'antenne d'émission (8) fait partie d'un circuit de résonnance série.

7. Circuit selon la revendication précédente, **caractérisé en ce que** le circuit d'antenne à résonnance série délivre de préférence un courant minimum allant de 60 à 80 mA sous la tension d'alimentation apportée.

8. Circuit selon l'une quelconque des revendications précédentes, **caractérisé en ce qu'**il comprend une puce sans contact destinée à recevoir un signal de réception et un étage d'adaptation de réception (16) pour adapter le signal de réception à la puce et/ou pour extraire un signal de porteuse synchronisée du signal de réception.

9. Circuit selon l'une quelconque des revendications précédentes, **caractérisé en ce qu'**il est intégré dans ou constitue un objet ayant un facteur de forme d'une carte à circuit intégré ou carte de type micro SD.

10. Circuit selon la revendication 1, **caractérisé en ce qu'**il comprend une boucle à verrouillage de phase PLL permettant de conserver artificiellement l'horloge du champ incident lorsque le circuit résonnant parallèle (7, 13) est découplé.

11. Dispositif ou appareil de communication comprenant le circuit selon l'une quelconque des revendications précédentes.

12. Procédé de communication sans-contact activée comprenant des étapes de réception et d'émission d'un champ électromagnétique véhiculant des données, l'étape de réception de données étant effectuée par un premier circuit résonnant (7,13) avec une première antenne (7) et l'étape d'émission de données étant effectuée par un second circuit résonnant (8,43) avec une seconde antenne (8), lesdits premier et second circuits résonnants étant distincts l'un de l'autre,

caractérisé en ce qu'il comprend une étape de synchronisation de phase changeant la phase d'une fréquence d'émission de manière que ladite émission de données s'effectue à une fréquence synchronisée en phase avec la fréquence du champ électromagnétique de réception, et

caractérisé en ce que ledit circuit (1) est agencé de manière à désactiver le premier circuit résonnant avec première antenne pendant que le second circuit résonnant avec la seconde antenne est actif et vice versa.

## Patentansprüche

1. Aktivierte kontaktlose Kommunikationsschaltung (1), umfassend Mittel zum Empfangen und zum Senden eines datenübertragenden elektromagnetischen Felds (5, 6, 7, 8), eine erste Resonanzschaltung (7, 13) mit einer ersten Antenne (7) zum Empfangen von Daten und eine zweite Resonanzschaltung (8,43) mit einer zweiten Antenne (8) zum Senden von Daten, wobei sich die erste und die zweite Resonanzschaltung voneinander unterscheiden,

dadurch gekennzeichnet, dass die Schaltung (1) zum Durchführen einer Phasensynchronisation durch Ändern der Phase einer Sendefrequenz konfiguriert ist, sodass die Datensendung mit einer Sendefrequenz durchgeführt wird, die mit der Empfangsfrequenz des elektromagnetischen Felds phasensynchronisiert ist, und dadurch gekennzeichnet, dass die Schaltung (1) angeordnet ist, um die erste Resonanzschaltung mit der ersten Antenne zu deaktivieren, während die zweite Resonanzschaltung mit der zweiten Antenne aktiv ist und umgekehrt.

2. Kommunikationsschaltung nach dem vorstehenden Anspruch,
dadurch gekennzeichnet, dass die synchronisierten Mittel zum Senden (17) zum Modulieren eines Trägersignals konfiguriert sind, das aus einem elektromagnetischen Datenempfangsfeld abgeleitet oder extrahiert wird.

3. Schaltung nach Anspruch 1, dadurch gekennzeichnet, dass sie zum Kommunizieren einer kontaktlosen Transponderantwort gemäß mindestens einer der ISO/IEC-Normen 14443 oder 15693 oder 18092 konfiguriert ist.

4. Schaltung nach einem der vorstehenden Ansprüche,
dadurch gekennzeichnet, dass die Antennen untereinander angeordnet sind, sodass ihre gegenseitige Induktivität durch ihren Abstand oder ihr Dämpfungsglied minimiert wird oder sich mindestens teilweise aufhebt, so dass sie eine vernachlässigbare Strominduktion in der Empfangsantenne, die durch die Sendeantenne verursacht wird, aufweisen.

5. Schaltung nach dem vorstehenden Anspruch,
dadurch gekennzeichnet, dass die zwei Antennen (7, 8) teilweise einander zugewandt sind, indem sie insbesondere auf zwei im Wesentlichen parallelen horizontalen Ebenen angeordnet sind.

6. Schaltung nach einem der vorstehenden Ansprüche,
dadurch gekennzeichnet, dass die Empfangsantenne (7) Teil einer Parallelresonanzschaltung ist und/oder die Sendeantenne (8) Teil einer Serienresonanzschaltung ist.

7. Schaltung nach dem vorstehenden Anspruch,
dadurch gekennzeichnet, dass die Serienresonanzantennenschaltung vorzugsweise einen Mindeststrom in dem Bereich von 60 bis 80 mA unter der zugeführten Versorgungsspannung liefert.

8. Schaltung nach einem der vorstehenden Ansprüche,
dadurch gekennzeichnet, dass sie einen kontaktlosen Chip umfasst, der dazu bestimmt ist, ein Empfangssignal und eine Empfangsanpassungsstufe (16) zum Anpassen des Empfangssignals an den Chip und/oder zum Extrahieren eines synchronisierten Trägersignals aus dem Empfangssignal zu empfangen.

9. Schaltung nach einem der vorstehenden Ansprüche,
dadurch gekennzeichnet, dass sie in ein Objekt, das einen Formfaktor einer Karte einer integrierten Schaltung oder einer Karte des Typs Mikro-SD aufweist, integriert ist oder ein solches Objekt bildet.

10. Schaltung nach Anspruch 1, **dadurch gekennzeichnet, dass** sie einen Phasenregelkreis PLL umfasst, der es ermöglicht, den Takt des einfallenden Feldes künstlich zu erhalten, wenn die Parallelresonanzschaltung (7, 13) entkoppelt ist.

11. Kommunikationsvorrichtung oder -gerät, umfassend die Schaltung nach einem der vorstehenden Ansprüche.

12. Aktiviertes kontaktloses Kommunikationsverfahren, umfassend die Schritte des Empfangens und des Sendens eines datenübertragenden elektromagnetischen Felds, wobei der Schritt des Datenempfangs durch eine erste Resonanzschaltung (7,13) mit einer ersten Antenne (7) durchgeführt wird, und der Schritt der Datensendung durch eine zweite Resonanzschaltung (8,43) mit einer zweiten Antenne (8) durchgeführt wird, wobei sich die erste und die zweite Resonanzschaltung voneinander unterscheiden,

    **dadurch gekennzeichnet, dass** es einen Phasensynchronisationsschritt, der die Phase einer Sendefrequenz ändert, umfasst, sodass die Datensendung mit einer Sendefrequenz durchgeführt wird, die mit der Empfangsfrequenz des elektromagnetischen Felds phasensynchronisiert ist, und
    **dadurch gekennzeichnet, dass** die Schaltung (1) angeordnet ist, um die erste Resonanzschaltung mit der ersten Antenne zu deaktivieren, während die zweite Resonanzschaltung mit der zweiten Antenne aktiv ist und umgekehrt.

## Claims

1. Activated contactless communication circuit (1) comprising means for receiving and transmitting a data-carrying electromagnetic field (5, 6, 7, 8), a first resonant circuit (7, 13) with a first antenna (7) for receiving data and a second resonant circuit (8, 43) with a second antenna (8) for transmitting data, said first and second resonant circuits being different from one another,

    **characterized in that** said circuit (1) is designed to carry out phase synchronization, by changing the phase of a transmission frequency, so that said data transmission is carried out at a transmission frequency that is phase-synchronized with the frequency of the receiving electromagnetic field, and
    **characterized in that** said circuit (1) is arranged so as to deactivate the first resonant circuit with first antenna while the second resonant circuit with the second antenna is active and vice versa.

2. Communication circuit according to the preceding claim,
**characterized in that** the synchronized transmission means (17) are designed to modulate a carrier signal derived from or extracted from a data-receiving electromagnetic field.

3. Circuit according to claim 1, **characterized in that** it is designed to communicate a contactless transponder response according to at least one of the ISO/IEC 14443 or 15693 or 18092 standards.

4. Circuit according to any of the preceding claims, **characterized in that** said antennas are arranged with respect to each other in such a way that the mutual inductance thereof is minimized by the spacing or attenuator thereof or at least partially canceled out, so as to have negligible current induction in the receiving antenna caused by the transmitting antenna.

5. Circuit according to the preceding claim, **characterized in that** the two antennas (7, 8) partially face one another, being arranged in particular on two substantially parallel horizontal planes.

6. Circuit according to any of the preceding claims, **characterized in that** the receiving antenna (7) forms part of a parallel resonance circuit and/or the transmitting antenna (8) forms part of a series resonance circuit.

7. Circuit according to the preceding claim, **characterized in that** the series resonance antenna circuit preferably produces a minimum current of 60 to 80 mA with the provided supply voltage.

8. Circuit according to any of the preceding claims, **characterized in that** it comprises a contactless chip designed for receiving a reception signal and a reception adaptation stage (16) for adapting the reception signal to the chip and/or for extracting a synchronized carrier signal from the reception signal.

9. Circuit according to any of the preceding claims, **characterized in that** it is integrated in or constitutes an object having the form factor of an integrated circuit card or micro SD card.

10. Circuit according to claim 1, **characterized in that** it comprises a PLL phase-locked loop which makes it possible to artificially conserve the incident field clock when the parallel resonant circuit (7, 13) is decoupled.

11. Communication device or apparatus comprising the circuit according to any of the preceding claims.

12. Method for activated contactless communication comprising steps of receiving and transmitting an electromagnetic field carrying data, the data receiving step being carried out by a first resonant circuit (7, 13) with a first antenna (7) and the data transmitting step being carried out by a second resonant circuit (8, 43) with a second antenna (8), said first and second resonant circuits being different from one another,

**characterized in that** it comprises a phase synchronization step changing the phase of a transmission frequency so that said data transmission is carried out at a frequency that is phase-synchronized with the frequency of the receiving electromagnetic field, and
**characterized in that** said circuit (1) is arranged so as to deactivate the first resonant circuit with first antenna while the second resonant circuit with the second antenna is active and vice versa.

Fig. 1

Fig. 2

Fig. 3A

Fig. 3B

**Fig. 4**

**Fig. 5**

| Antenne de Réception | | |
|---|---|---|
| L | 663 nH | |
| R | 1,59 KΩ | |
| C | NA | |

**Fig. 6**

**Fig. 7**

**Fig. 8**

25 — 13,56 MHz

38 — 29

26 — Données

**Fig. 9**

L   C

**Fig. 10**

$X_C$

(Ω)

$X_L$

70
60
50
40
30
20
10
0

KHz

100   1000   10000   100000

**Fig. 11**

8

2

8

7

1A

1A

**Fig. 12**

**Fig. 13**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1801741 B1
- EP 1898342 A
- EP 0926855 A
- EP 1898342 A2
- US 6356535 B1
- US 5621913 A